# EUROPÄISCHE PATENTANMELDUNG

(11) **EP 4 756 165 A1**
(43) Veröffentlichungstag der Anmeldung: **10.06.2026**
(21) Anmeldenummer: 25221945.6
(22) Anmeldetag: 09.12.2025
(51) Int. Cl.: E05F 11/06, E05F 15/619

(54) **FLÜGELBOCK ZUM VERBINDEN EINES SCHUBMITTELS EINES FENSTERÖFFNERS MIT EINEM FENSTERFLÜGEL**

(30) Priorität: 09.12.2024 DE 202024107120 U
(71) Anmelder: Aumüller Aumatic GmbH, 86672 Thierhaupten (DE)
(72) Erfinder: Walter, Ingo, 70184 Stuttgart (DE)
(74) Vertreter: ERNICKE Patent- und Rechtsanwälte PartmbB

(57) **Zusammenfassung**

Die Erfindung betrifft einen Flügelbock (1) zum Verbinden eines Schubmittels (S) eines Fensteröffners mit einem Fensterflügel, umfassend: einen Fensterverbindungsabschnitt (100) zum Verbinden des Flügelbocks (1) mit dem Fensterflügel; einen Schubmittelverbindungsabschnitt (200) zum lösbaren Verbinden des Flügelbocks (1) mit dem Schubmittel (S); und einen lösbaren Arretierstift (300) mit einem Stiftabschnitt (310) zum lösbaren Verbinden des Schubmittelverbindungsabschnitts (200) mit dem Schubmittel (S). Der Schubmittelverbindungsabschnitt (200) umfasst: eine Stiftaufnahmepassage (210) zum Einführen des Stiftabschnitts (310); und eine Schubmittelaussparung (220) zur Anordnung des Schubmittels (S) in einer Schubmittelmontageposition (SMP). Die Stiftaufnahmepassage (210) verläuft durch die Schubmittelaussparung (220), so dass der Stiftabschnitt (310) zum lösbaren Verbinden des Schubmittelverbindungsabschnitts (200) mit dem Schubmittel (S) durch eine durch das Schubmittel (S) verlaufende Schubmittelpassage (SP) einführbar ist. Der Arretierstift (300) umfasst einen Arretierabschnitt (320), der zum lösbaren Arretieren des Arretierstifts (300) in eine Arretierposition (AP) rotierbar ist. Durch das Bewegen des Arretierabschnitts in die Arretierposition wird das Arretieren des Arretierstifts bewirkt, also dass der Arretierstift nicht aus der Stiftaufnahmepassage herausziehbar ist bzw. dass der Arretierstift nicht entlang der Stiftaufnahmepassage bewegbar ist.

## Beschreibung

Die vorliegende Erfindung betrifft Fensteröffnungsmechanismen, insbesondere einen Flügelbock zum Verbinden eines Schubmittels eines Fensteröffners mit einem Fensterflügel.

Fensteröffnungsmechanismen sind in verschiedenen Ausführungen bekannt und werden verwendet, um Fensterflügel zu öffnen und zu schließen. Ein typischer Fensteröffnungsmechanismus umfasst ein Schubmittel, das mit einem Fensterflügel verbunden ist, um diesen zu bewegen. Ein Beispiel für ein Schubmittel ist eine (Schub-)Kette, die mit einem Kettenantrieb bewegbar ist.

Ein bekannter Stand der Technik umfasst einen Flügelbock, der mittels Schraube mit dem Schubmittel verbindbar ist. Diese Verbindungsmethode kann kompliziert und zeitaufwendig in der Montage sein und erfordert den Einsatz von Werkzeugen, was die Wartung und Reparatur erschwert. Zudem ermöglichen derartige Flügelböcke kein werkzeugloses Lösen des Flügelbocks vom Schubmittel.

Ein weiterer Stand der Technik umfasst einen Flügelbock, der mittels Pressstift mit dem Schubmittel verbindbar ist. Diese Verbindungsmethode kann ebenfalls kompliziert und zeitaufwendig in der Montage sein und erfordert ebenfalls den Einsatz von Werkzeugen (z.B. Hammer), zum Teil unter erhöhtem Kraftaufwand, was die Wartung und Reparatur (insbesondere in großer Höhe) erschwert. Zudem ermöglichen derartige Flügelböcke kein werkzeugloses Lösen des Flügelbocks vom Schubmittel.

US 2011 / 0 302 843 A1 offenbart eine Antriebskette, die mit einem Stift in Form eines R-Typ Pin an einer Halterung befestigbar ist. Der Stift ist linear in eine Öffnung der Halterung einschiebbar und ein R-Bügel des Stifts kann an einer Außenseite der Halterung anliegen. Der Stift ist jederzeit in Längsrichtung der Stiftachse bewegbar.

DE 10 2021 200 593 B3 offenbart eine Konstruktion zur Anbindung einer Schubkette an einem zu bewegenden Objekt. Die Konstruktion umfasst ein Abschlussstück, das mittels eines separaten Federelements federbelastet ist, um eine schubstabile Lage der Kettenglieder aufrecht zu erhalten. Ein äußertes Kettenanschlussglied wird mit einem zylindrischen Tragstift an einem Flügelböckchen befestigt, wobei der Tragstift vollständig entlang seiner Längsachse in eine Bohrung im Träger eingesetzt wird, sodass die Enden des Tragstifts bündig mit den Außenflächen des Trägers abschließen. Der Tragstift hat an einem Ende eine Umlaufkerbe, in die ein Sprengring einsetzbar ist, der sich an der zylindrischen Innenfläche der Bohrung anlegen kann. In DE 10 2016 203 452 A1 ist eine ähnlich wirkende Befestigung offenbart, bei der ein Schraubbolzen vorgesehen ist, der durch einen Träger gesteckt und endseitig mit einer separaten Schraubmutter gesichert wird.

Aus DE 10 2016 203 452 A1 ist ein Schubelement in Form einer Kette bekannt, wobei das Schubelement endseitig mit einem Koppelteil versehen ist. Das Koppelteil ist über einen Lagerbolzen mit einem Lagerbock verbunden und zwar derart, dass das Koppelteil um eine quer zur Kette verlaufende Schwenkachse gelenkig ist. Ein gerader Abschnitt des Lagerbolzens durchdringt ausschließlich das Koppelteil. Ein Ösenabschnitt des Koppelteils bildet in Zusammenwirkung mit einer am Lagerbock angeordneten Schraube die Schwenkachse.

DE 20 2014 101 334 U1 schlägt zur Befestigung eines Endglieds einer Kette an einem Grundkörper vor, zunächst einen zylindrischen Befestigungsstift vollständig eine Bohrung am Grundkörper einzuschieben und nachfolgend den Befestigungsstift mit einer separaten Madenschraube zu sichern, die in die Öffnung der Bohrung eingeschraubt wird.

Es ist Aufgabe der vorliegenden Erfindung einen verbesserten Flügelbock bereitzustellen, der eine einfache und stabile Verbindung zwischen dem Schubmittel und dem Fensterflügel ermöglicht, werkzeuglos zu montieren und zu warten ist und gleichzeitig eine kompakte Bauweise aufweist. Die Verbindung soll wirksam gegen eine Selbstöffnung im Betrieb gesichert und weiterhin werkzeuglos öffenbar sein.

Die Erfindung löst diese Aufgabe mit den Merkmalen des Flügelbocks gemäß Anspruch 1.

Die vorliegende Erfindung betrifft einen Flügelbock zum Verbinden eines Schubmittels eines Fensteröffners mit einem Fensterflügel. Der Flügelbock umfasst einen Fensterverbindungsabschnitt zum Verbinden des Flügelbocks mit dem Fensterflügel. Der Flügelbock umfasst einen Schubmittelverbindungsabschnitt zum lösbaren Verbinden des Flügelbocks mit dem Schubmittel. Der Flügelbock umfasst einen lösbaren Arretierstift zum lösbaren Verbinden des Schubmittelverbindungsabschnitts mit dem Schubmittel. Der Arretierstift umfasst einen Stiftabschnitt und einen Arretierabschnitt. "Lösbar" bedeutet in Zusammenhang mit dieser Offenbarung vorzugsweise, dass die Verbindung werkzeuglos lösbar ist.

Der Schubmittelverbindungsabschnitt umfasst eine Stiftaufnahmepassage zum Einführen des Stiftabschnitts. Der Schubmittelverbindungsabschnitt umfasst eine Schubmittelaussparung zur Anordnung des Schubmittels in einer Schubmittelmontageposition. Die Stiftaufnahmepassage verläuft durch die Schubmittelaussparung.

Der Stiftabschnitt ist zum lösbaren Verbinden des Schubmittelverbindungsabschnitts mit dem Schubmittel durch eine durch das Schubmittel verlaufende Schubmittelpassage einführbar. Dies ist insbesondere bei (Schub-)Ketten vorteilhaft, da eine Kette mehrere Kettenglieder umfasst. Zwischen den Kettengliedern weist eine (Schub--) Kette Passagen bzw. Öffnungen (Schubmittelpassagen) auf, durch die der Stiftabschnitt einführbar ist. In vorteilhafter Weise werden die Schubmittelpassagen zum Verbinden bzw. Verschränken des Schubmittels mit dem Flügelbock genutzt. Anpassungen am Schubmittel, insbesondere an der (Schub-)Kette, sind nicht notwendig.

Der Arretierabschnitt ist zum lösbaren Arretieren des Arretierstifts in eine Arretierposition bewegbar, insbesondere rotierbar. Durch das Bewegen des Arretierabschnitts in die Arretierposition wird das Arretieren des Arretierstifts bewirkt. Arretierung bedeutet, dass der Arretierstift nicht aus der Stiftaufnahmepassage herausziehbar ist bzw. dass der Arretierstift nicht entlang der Stifaufnahmepassage bewegbar ist.

Der Stiftabschnitt und der Arretierabschnitt können bevorzugt winklig zueinander, insbesondere senkrecht zueinander angeordnet oder ausgerichtet sein. Der Arretierstift hat bevorzugt eine L-Form, wobei ein erster Schenkel der L-Form den Stiftabschnitt und ein zweiter Schenkel der L-Form den Arretierabschnitt bildet.

Die beanspruchte Erfindung bietet verschiedene Vorteile. Durch die Verwendung eines Arretierstifts mit einem Arretierabschnitt, der in eine Arretierposition bewegbar ist, insbesondere durch Rotation, weiter insbesondere ohne dass ein Stiftabschnitt des Arretierstifts innerhalb einer Stiftaufnahmepassage des Flügelbocks translatorisch bewegt wird, ist der Arretierstift wirksam gegen ein Herausziehen und somit gegen eine Selbstöffnung gesichert. In der Arretierposition ist der Arretierstift gegen eine Translationsbewegung arretiert.

Die Arretierung kann durch eine Bewegung des Arretierabschnitts in eine Öffnungsposition gezielt gelöst werden, d.h. der Arretierstift kann durch eine Bewegung des Arretierabschnitts in eine Öffnungsposition für eine Translationsbewegung freigegeben werden.

Durch die Arretierung ist das Herausziehen des Arretierstifts verhindert. Durch die Lösung oder Freigabe der Arretierung kann das Herausziehen des Arretierstifts ermöglicht sein. In der Arretierposition kann der Arretierabschnitt des Arretierstifts in eine Einrastaussparung bewegt sein und/oder an einem Arretierkörper des Flügelbocks anliegen. Das Herausziehen des Stiftabschnitts kann durch die Anlage des Arretierabschnitts am Arretierkörper verhindert sein, insbesondere durch Arretierung der Translationsbewegung mittels körperlicher Anlage. Mit anderen Worten ist der Arretierstift bei Vorliegen der Arretierposition, d.h. wenn der Arretierabschnitt in der Arretierposition ist, gegen ein Herausziehen arretiert. Mit anderen Worten ist der Arretierstift bei Vorliegen der Arretierposition in der Translationsrichtung des Stiftabschnitts fixiert. Mit anderen Worten ist der Arretierstift bei Vorliegen der Arretierposition (unverschieblich arretiert und) lediglich zu einer Öffnungsposition hin bewegbar, insbesondere rotierbar. Nur oder erst bei Erreichen der Öffnungsposition ist die Arretierung / Verhinderung einer Verschiebung des Stiftabschnitts aufgehoben.

Der Arretierabschnitt kann (durch Rotation) in eine Arretierposition oder in eine Öffnungsposition bewegt werden. Insbesondere kann der Arretierabschnitt zwischen der Arretierposition und der Öffnungsposition bewegt werden, weiter insbesondere ohne dass sich das Schubmittel unkontrolliert vom Flügelbock löst. Dies ermöglicht eine einhändige und werkzeuglose Montage. Eine Bewegung des Arretierabschnitts zwischen der Arretierposition und der Öffnungsposition ist bevorzugt orthogonal zu einer Bewegung des Stiftabschnitts zwischen einer eingeführten und einer herausgezogenen Position.

Die Arretierposition kann beliebig vorgegeben sein. Die Arretierposition kann eine Rastposition sein. Der Arretierabschnitt kann in der Arretierposition in Rotationsrichtung mit einer (händisch) überwindbaren Kraft gehalten und/oder eingerastet sein. Bevorzugt kann eine Arretierposition vorliegen, wenn oder sobald der Arretierabschnitt in einer Einrastaussparung des Flügelbocks aufgenommen und/oder gehalten und/oder eingerastet ist. Die Einrastaussparung hat bevorzugt eine Erstreckungsrichtung, die quer zu einer Längsrichtung des Stiftabschnitts orientiert ist. Eine Bewegung des Arretierabschnitts von der Arretierposition in die Öffnungsposition kann gehemmt sein, insbesondere durch eine (händisch) überwindbare Kraft, weiter insbesondere durch eine Rastkraft. Die überwindbare Kraft, insbesondere die Rastkraft, kann einer Rotation entgegenwirken. Alternativ oder zusätzlich zu einer Einrastaussparung kann ein Einrastvorsprung oder ein beliebiges anderes Einrastmittel vorliegen. Mit anderen Worten kann eine Arretierposition vorliegen, wenn oder sobald der Arretierabschnitt durch ein Einrastmittel aufgenommen und/oder gehalten und/oder eingerastet ist. Das Einrastmittel kann ein Bestandteil des Flügelbocks, ein Bestandteil des Arretierstifts oder ein separates Teil sein.

Der Stiftabschnitt kann gleitend, vorzugsweise werkzeuglos, in eine Stiftaufnahmepassage am Flügelbock einführbar sein. Durch oder während der Einführung des Stiftabschnitts kann die Verbindung des Schubmittels zum Flügelbock hergestellt werden. Durch oder während des Herausziehens des Stiftabschnitts kann das Schubmittel vom Flügelbock gelöst werden.

Die eine Bewegung, insbesondere Rotationsbewegung des Arretierabschnitts und eine Bewegung, insbesondere Translationsbewegung des Stiftabschnitts voneinander getrennt erfolgen können. Insbesondere kann (1) die Bewegung des Arretierabschnitts zwischen der Arretierposition und der Öffnungsposition einerseits und (2) das Einführen oder Herausziehen des Stiftabschnitts andererseits voneinander getrennt ausführbar sein. Somit kann das Arretieren / Freigeben des Arretierstifts funktional getrennt von dem Lösen / Verbinden von Schubmittel und Flügelbock erfolgen. Damit wird eine sichere und fehlerfreie Montage, Demontage oder Notöffnung unterstützt. Durch die vorgenannte Trennung der Bewegungen sind nur geringe Handkräfte erforderlich, was das Arbeiten von einer Leiter oder Hebebühne aus besonders sicher macht und Unfällen vorbeugt.

In vorteilhafterweise ist der Arretierstift in zwei Abschnitte aufgeteilt, die zwei getrennte Funktionen erfüllen. Der Stiftabschnitt dient dem lösbaren Verbinden bzw. Verschränken des Schubmittels mit dem Flügelbock. Der Arretierabschnitt dient dem lösbaren Arretieren des Arretierstifts. Insbesondere kann der Arretierabschnitt zwischen der Arretierposition und einer Öffnungsposition bewegbar, insbesondere rotierbar, sein. Bei dieser Bewegung bleibt der Siftabschnitt vorzugsweise in seiner eingeführten Position innerhalb der Stiftaufnahmepassage. Folglich kann der Arretierabschnitt werkzeuglos bewegt werden zwischen der Arretierposition und der Öffnungsposition, ohne dass sich der Stiftabschnitt aus der Stiftaufnahmepassage löst. Diese Bewegung kann in vorteilhafterweise durch einen Monteur einhändig ausgeführt werden, insbesondere mit geringem Kraftaufwand. Weiterhin wird durch diese Funktionsauftrennung verhindert, dass sich der Flügelbock unkontrolliert vom Schubmittel löst, wenn oder während der Arretierabschnitt von der Arretierposition in die Öffnungsposition bewegt wird. Wartungsarbeiten können so einfach z.B. in großen Höhen durchgeführt werden.

Insbesondere kann der Arretierabschnitt um eine Passagenlängsachse der Stiftaufnahmepassage rotierbar sein, wobei der Stiftabschnitt entlang der Passagenlängsachse einführbar ist. In vorteilhafterweise kann die Stiftaufnahmepassage zur Führung der Rotationsbewegung des Arretierabschnitts genutzt werden. Dies ermöglicht eine platz- und komponentensparende Bauweise und eine sichere Führung der Rotationsbewegung des Arretierabschnits sowie eine sichere Führung der Translationsbewegung des Stiftabschnitts beim Einführen in die Stiftaufnahmepassage.

Die vorgenannten Aspekte können jeweils in Alleinstellung oder in Kombination zur Lösung der Aufgabe genutzt werden. In den weiteren Unteransprüchen, Figuren und der Zeichnungsbeschreibung sind zusätzliche vorteilhafte Ausführungsformen des offenbarungsgemäßen Flügelbocks offenbart.

### Zeichnungsbeschreibung

Die Offenbarung ist in den Zeichnungen beispielhaft und schematisch dargestellt. Es zeigen:
- Figur 1:: einen offenbarungsgemäßen Flügelbock (1) in perspektivischer Darstellung mit dem Schubmittel (S) in der Schubmittelmontageposition (SMP) und dem Arretierstift (300) in der Arretierposition (AP)
- Figur 2:: einen offenbarungsgemäßen Flügelbock (1) ohne Schubmittel (S) und ohne Arretierstift (300)
a) in einer Seitenansicht
b) in einer Draufsicht (von "unten")
- Figur 3:: einen offenbarungsgemäßes Flügelbock (1) in perspektivischer Darstellung
a) ohne Schubmittel (S) und ohne Arretierstift (300),
b) mit unverbundenem Schubmittel (S) und ohne Arretierstift (300),
c) mit unverbundenem Schubmittel (S) in Schubmittelmontageposition (SMP) und nicht-eingeführtem Arretierstift (300),
d) mit verbundenem Schubmittel (S) in Schubmittelmontageposition (SMP) und eingeführtem Arretierstift (300) in einer Öffnungspostion,
e) mit verbundenem Schubmittel (S) in Schubmittelmontageposition (SMP) und eingeführtem Arretierstift (300), rotiert in eine Arretierposition (AP);

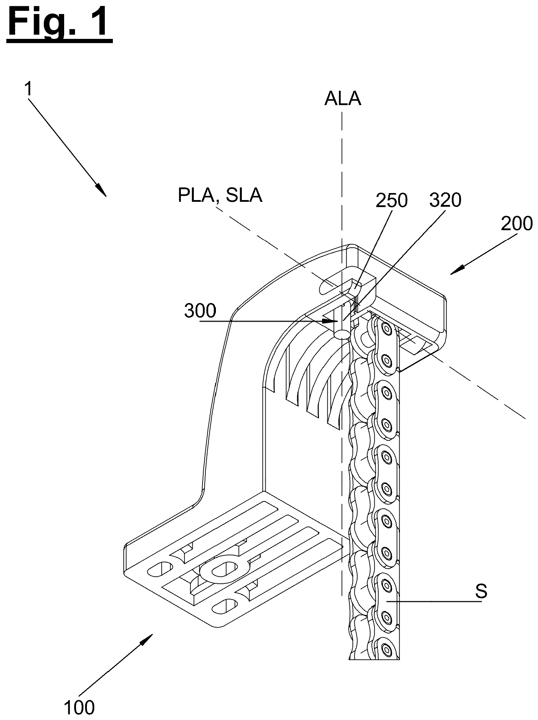

Die Figuren 1 bis 3 zeigen beispielhaft eine mögliche Ausführungsform des offenbarungsgemäßen Flügelbocks (1). In den dargestellten Figuren wird beispielhaft eine Kette (insbesondere eine Schubkette) als Schubmittel (S) gezeigt, die durch einen Kettenantrieb als Fensteröffner angetrieben werden kann. Die gezeigte Ausführungsform ist beliebig kombinierbar mit anderen Arten von Schubmitteln und beliebigen Arten von Fensteröffnern, z.B. Linearantrieb, Hubspindelantrieb, etc.. In Betracht kommen jegliche Schubmittel (S), die eine translatorische Schub- und Ziehbewegung zum Öffnen und Schließen eines Fensterflügels ermöglichen

Figur 1 zeigt eine offenbarungsgemäßen Flügelbock (1) in perspektivischer Darstellung. Der Flügelbock (1) umfasst einen Fensterverbindungsabschnitt (100) zum Verbinden des Flügelbocks (1) mit einem Fensterflügel, einen Schubmittelverbindungsabschnitt (200) zum lösbaren Verbinden des Flügelbocks (1) mit einem Schubmittel (S) und einen Arretierstift (300), zum lösbaren Verbinden des Schubmittelverbindungsabschnitts (200) mit dem Schubmittel (S).

Wie in Figur 1 dargestellt, sind der Fensterverbindungsabschnitt (100) und der Schubmittelverbindungsabschnitt (200) vorzugsweise mit einem Querversatz relativ zueinander angeordnet. Hierzu sind der Fensterverbindungsabschnitt (100) und der Schubmittelverbindungsabschnitt (200) vorzugsweise in einer Höhenrichtung und in einer Längsrichtung senkrecht zur Höhenrichtung zueinander beabstandet. Folglich kann das Schubmittel (S) räumlich getrennt zum Fensterflügel am Schubmittelverbindungsabschnitt (200) verbindbar sein, während der Fensterflügel am Fensterverbindungsabschnitt (100) verbindbar ist. Der Fensterverbindungsabschnitt (100) kann beispielsweise verschraubbar sein mit dem Fensterflügel.

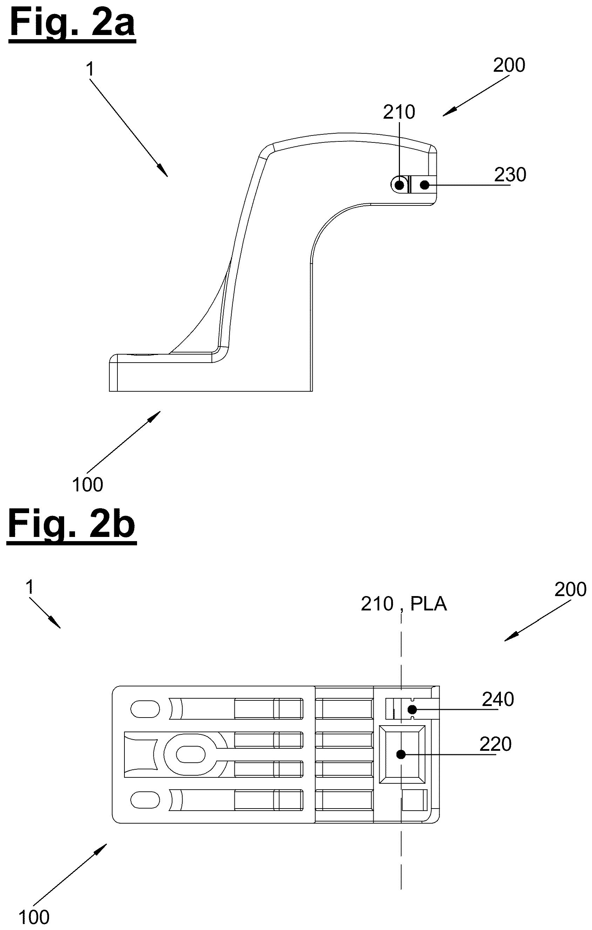

In Figur 2a und 2b ist der in Figur 1 beispielhaft dargestellte Flügelbock (1) in einer Seitenansicht und in einer Draufsicht (von unten) ohne das Schubmittel (S) und ohne den Arretierstift (300) dargestellt. Der Schubmittelverbindungsabschnitt (200) umfasst eine Stiftaufnahmepassage (210) und eine Schubmittelaussparung (220), die zur Anordnung des Schubmittels (S) in einer Schubmittelmontageposition (SMP) dient. Die Stiftaufnahmepassage (210) kann als (längliche bzw. zylinderförmige bzw. kegelförmige) Bohrung durch den Schubmittelverbindungsabschnitt (200) ausgebildet sein. Die Schubmittelaussparung (220) kann als ein von einer Seite zugänglicher Hohlraum bzw. Öffnung ausgebildet sein.

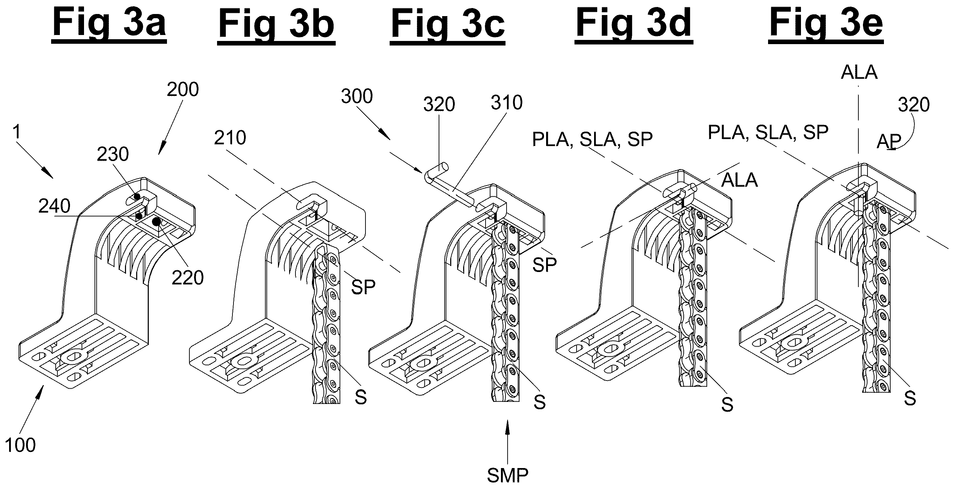

In den Figuren 3a bis e ist der in den Figuren 1, 2a und 2c beispielhaft dargestellte Flügelbock (1) in perspektivischen Darstellungen gezeigt, die schrittweise das lösbare Verbinden des Schubmittel (S) mit dem Flügelbock (1) zeigen.

Wie in Figur 3c gezeigt besteht der Arretierstift (300) aus einem Stiftabschnitt (310) und einem Arretierabschnitt (320). Der Stiftabschnitt (310) ist durch eine durch das Schubmittel (S) verlaufende Schubmittelpassage (SP) einführbar, um den Schubmittelverbindungsabschnitt (200) mit dem Schubmittel (S) zu verbinden (siehe Figuren 3b, 3c und 3d).

Die Stiftaufnahmepassage (210) verläuft durch die Schubmittelaussparung (220), so dass der Stiftabschnitt (310) zum lösbaren Verbinden des Schubmittelverbindungsabschnitts (200) mit dem Schubmittel (S) durch eine durch das Schubmittel (S) verlaufende Schubmittelpassage (SP) einführbar ist. Dies ist insbesondere bei der in den Figuren gezeigten Schubketten vorteilhaft, da diese mehrere Kettenglieder umfasst. Zwischen den Kettengliedern weist die Schubkette Passagen bzw. Öffnungen (Schubmittelpassagen) auf, durch die der Stiftabschnitt (310) einführbar ist. In vorteilhafter Weise wird eine Schubmittelpassage an einem Ende des Schubmittels (S) zum Verbinden bzw. Verschränken des Schubmittels (S) mit dem Flügelbock (1) genutzt. Anpassungen am Schubmittel (S) sind nicht notwendig.

Der Arretierabschnitt (320) ist zum lösbaren Arretieren des Arretierstifts (300) in eine Arretierposition (AP) bewegbar, insbesondere rotierbar (siehe Figuren 3d und 3e).

Wie in den Figuren 1, 2a, 2b und 3a bis 3e dargestellt, ist der Arretierabschnitt (320) vorzugsweise um eine Passagenlängsachse (PLA) der Stiftaufnahmepassage (210) rotierbar. Der Stiftabschnitt (310) ist vorzugsweise entlang der Passagenlängsachse (PLA) einführbar.

Wie im beispielhaft in den Figuren gezeigten Ausführungsbeispiel offenbart kann die Stiftaufnahmepassage (210) zylindrisch geformt sein entlang der Passagenlängsachse (PLA). "Zylindrisch geformt" bedeutet in diesem Zusammenhang, dass die Stiftaufnahmepassage (210) eine Querschnittsfläche aufweist, die im Wesentlichen konstant ist entlang der Passagenlängsachse (PLA). Die Querschnittsfläche kann kreisförmig sein (siehe Figur 2a). Alternative Querschnittsflächen sind in beliebigen Ausgestaltungen denkbar, insbesondere oval, rechteckig, mehreckig. Alternativ kann die Stiftaufnahmepassage (210) konisch geformt sein entlang der Passagenlängsachse (PLA). "Konisch geformt" bedeutet in diesem Zusammenhang, dass die Stiftaufnahmepassage (210) eine Querschnittsfläche aufweist, die sich im Wesentlichen verjüngt entlang der Passagenlängsachse (PLA). Die Begriffsdefinitionen hinsichtlich "zylindrisch" und "konisch" sind analog auf die weiteren Komponenten des Flügelbocks anwendbar, insbesondere auf den Stiftabschnitt (310) und den Arretierabschnitt (320) des Arretierstifts (300).

Wie in Figur 3c und 3d dargestellt, kann der Stiftabschnitt (310) zylindrisch geformt sein entlang einer Stiftlängsachse (SLA). Alternativ kann der Stiftabschnitt (310) konisch geformt sein entlang der Stiftlängsachse (SLA).

Wie in Figur 3c und 3d dargestellt ist der Durchmesser des Stiftabschnitts (310) vorzugsweise gleich oder kleiner als der Durchmesser der Stiftaufnahmepassage (210), so dass der Stiftabschnitt (310) gleitend, vorzugsweise werkzeuglos, einführbar ist in die Stiftaufnahmepassage (210). Vorzugsweise sind die Form des Stiftabschnitts (310) und die Form der Stiftaufnahmepassage (210) komplementär. Im vollständig eingeführten Zustand füllt der Stiftabschnitts (310) die Stiftaufnahmepassage (210) im Wesentlichen aus. Der Stiftabschnitt (310) kann im vollständig eingeführten Zustand durch die Wandungen der Stiftaufnahmepassage (210) abgestützt werden. Vorzugsweise sind die Form des Stiftabschnitts (310) und die Form der Stiftaufnahmepassage (210) derart komplementär ausgebildet, dass zwischen dem Stiftabschnitt (310) und den Wandungen der Stiftaufnahmepassage (210) eine Toleranz bzw. ein Spiel vorhanden ist. Folglich kann der Stiftabschnitt (310) gleitend, vorzugsweise werkzeuglos, einführbar sein in die Stiftaufnahmepassage (210). Dadurch, dass eine Toleranz, bzw. ein Spiel vorhanden sein kann, können verschiedenste Materialien benutzt werden. Der Flügelbock (1) und insbesondere Schubmittelverbindungsabschnitt (200) und/oder der Arretierstift (300) können beispielsweise aus Kunststoff gebildet sein. Die Passgenauigkeit von Kunststoff reicht für die vorliegende Anwendung aus, da das Arretieren des Arretierstifts (300) bewirkt wird durch das Bewegen des Arretierabschnitts (320) in die Arretierposition (AP), und nicht wie aus dem Stand der Technik bekannt, durch Verschrauben bzw. Pressen eines Stiftabschnittes in eine Stiftaufnahmepassage.

Wie in Figur 3c und 3d dargestellt, kann der Arretierabschnitt (320) zylindrisch oder konisch geformt sein entlang einer Arretierlängsachse (ALA). Der Stiftabschnitt (310), insbesondere die Stiftlängsachse (SLA), und der Arretierabschnitt (320), insbesondere die Arretierlängsachse (ALA), können winklig zueinander angeordnet sind, insbesondere senkrecht. Folglich kann der Arretierabschnitt (320) einen Hebelarm bilden, an dem der Arretierstift (300) um die Passagenlängsachse (PLA) bzw. um die Stiftlängsachse (SLA), rotierbar ist. Weiterhin kann dadurch der Arretierabschnitt (320) in die Arretierposition (AP) bewegbar, insbesondere rotierbar, sein, ohne dass der Stiftabschnitt (310) innerhalb der Stiftaufnahmepassage (210) translatorisch bewegt wird. Die Verschränkung bzw. Verbindung zwischen dem Stiftabschnitt (310) und dem Schubmittel (S) bleibt unverändert bestehen, während der Arretierabschnitt (320) zwischen einer Arretierposition (AP) und einer geöffneten Position bewegbar ist. Folglich kann der Arretierstift (300) in eine Arretierposition (AP) bzw. in eine Öffnungsposition bewegt werden, ohne dass sich das Schubmittel (S) unkontrolliert vom Flügelbock (1) löst. Die ermöglicht eine einhändige und werkzeuglose Montage. Dies ist insbesondere für eine Montage in großen Höhen entscheidend.

In einer nicht gezeigten Ausführungsform kann der Arretierabschnitt (320) gebildet sein als Ring. An der Arretierposition (AP) kann eine hervorstehende Strebe angeordnet sein, auf die der Ring positionierbar ist zum Arretieren. Alternative Arretiertechnologien zum Arretieren des Arretierabschnitts (320) (z.B. Einklipsen, Abdeckung zum Zuklappen, etc.) sind mit der vorliegenden Offenbarung ebenfalls realisierbar.

Die in den Figuren 1 bis 3 gezeigte beispielhafte Ausführungsform umfasst einen Schubmittelverbindungsabschnitt (200) mit einer Einführaussparung (230), wobei der Arretierabschnitt (320) beim Einführen des Stiftabschnitts (310) in die Stiftaufnahmepassage (210) durch die Einführaussparung (230) durchführbar ist. Hierzu kann die Einführaussparung (230) durch einen abstehenden Arretierkörper (250), z.B. durch eine "Rippe", gebildet werden. Zwischen dem Arretierkörper (250) und einer Wandung des Schubmittelverbindungsabschnitts (200) kann die Einsühraussparung (230) gebildet werden. Wie in den Figuren 3c und 3d gezeigt kann der Arretierabschnitt (320) beim Einführen des Stiftabschnitts (310) in die Stiftaufnahmepassage (210) durch die Einführaussparung (230) durchgeführt werden.

Die in den Figuren 1 bis 3 gezeigte beispielhafte Ausführungsform umfasst weiterhin einen Schubmittelverbindungsabschnitt (200) mit einer Einrastaussparung (240), wobei der Arretierabschnitt (320) zum lösbaren Arretieren des Arretierstifts (300) am Schubmittelverbindungsabschnitt (200) in die Einrastaussparung (240) bewegbar, insbesondere rotierbar, ist. Dieser Schließ-Mechanismus ist vergleichbar mit einem "Bajonettverschluss". Wie in den Figuren 1 bis 3 beispielhaft gezeigt können Einführaussparung (230) und Einrastaussparung (240) durch ein und denselben Arretierkörper (250) gebildet sein. Zwischen dem Arretierkörper (250) und einer ersten Wandung des Schubmittelverbindungsabschnitt (200) kann die Einführaussparung (230) gebildet werden. Zwischen dem Arretierkörper (250) und einer zweiten Wandung des Schubmittelverbindungsabschnitt (200) kann die Einrastaussparung (240) gebildet werden. Die erste Wandung und die zweite Wandung sind vorzugsweise winklig zueinander angeordnet, insbesondere rechteckig. Alternativ kann die Einrastaussparung (240) durch einen weiteren Arretierkörper (250) gebildet sein. Der Arretierkörper (250) kann derart angeordnet sein, dass er den Arretierabschnitt (320) des Arretierstifts (300) in der Arretierposition (AP) hält. Insbesondere kann der Arretierkörper (250) ein Herausziehen des Stiftabschnitts (310) aus der Stuftaufnahmepassage (210) verhindern. Vorzugsweise dadurch, dass der Arretierabschnitt (320) in der Arretierposition (AP) am Arretierkörper (250) anliegt, so dass der Arretierstift (300) nicht aus der Stiftaufnahmepassage (210) herausziehbar ist.

Die Figuren 3a bis e zeigen beispielhaft die einzelnen Schritte eines Montageverfahrens zum Verbinden des offenbarungsgemäßen Flügelbocks (1) mit dem Schubmittel:
Figur 3a: Vorbereitung des Flügelbocks (1): Der Flügelbock (1) wird in der in Figur 3a gezeigten Konfiguration bereitgestellt. Der Fensterverbindungsabschnitt (100) kann mit einem Fensterflügel verbunden werden (nicht gezeigt in Figur 3a).

Figur 3b: Einführen des Schubmittels (S): Das Schubmittel (S) wird in die Schubmittelaussparung (220) des Schubmittelverbindungsabschnitts (200) eingeführt, wie in Figur 3b gezeigt.

Figur 3c: Das Schubmittel (S) wird in die Schubmittelmontageposition (SMP) gebracht. Hierfür kann ein Ende des Schubmittels (S) an einem Anschlag an der Schubmittelaussparung (220) anliegend angeordnet werden. Durch den Anschlag kann sichergestellt werden, dass die Schubmittelpassage (SP) mit der Stiftaufnahmepassage (210) ausgerichtet wird, so dass der Stiftabschnitt (310) durch beide einführbar ist.

Figur 3d: Einführen des Arretierstifts (300) bis zu einer vollständig eingeführten Position: Der Stiftabschnitt (310) des Arretierstifts (300) wird in die Stiftaufnahmepassage (210) eingeführt. Der Arretierabschnitt (320) bleibt außerhalb der Stiftaufnahmepassage (210) und wird durch die Einführaussparung (230) durchgeführt.

Figur 3e: Rotieren des Arretierabschnitts (320): Der Arretierabschnitt (320) wird um die Passagenlängsachse (PLA) bzw. um die Stiftlängsachse (SLA) rotiert, um den Arretierstift (300), insbesondere den Arretierabschnitt (320) in die Arretierposition (AP) zu bringen. In dieser Position ist der Arretierstift (300) sicher arretiert, und das Schubmittel (S) ist mit dem Flügelbock (1) verbunden.

Das in den Figuren 3a bis 3e gezeigte Montageverfahren kann zum Montieren und Demontieren benutzt werden. Zum Demontieren sind die Montageschritte entsprechend in umgekehrter Reihenfolge durchzuführen.

Dieses Montageverfahren ermöglicht eine einfache und werkzeuglose Verbindung des Schubmittels (S) mit dem Flügelbock (1), was die Wartung und Reparatur erleichtert.

Abwandlungen der Offenbarung sind in verschiedener Weise möglich. Die zu den jeweiligen Ausführungsbeispielen gezeigten, beschriebenen oder beanspruchten Merkmale können in beliebiger Weise miteinander kombiniert, gegeneinander ersetzt, ergänzt oder weggelassen werden.

### Bezugszeichenliste

- 1: Flügelbock
- 100: Fensterverbindungsabschnitt
- 200: Schubmittelverbindungsabschnitt
- 210: Stiftaufnahmepassage
- PLA: Passagenlängsachse
- 220: Schubmittelaussparung
- 230: Einführaussparung
- 240: Einrastaussparung
- 250: Arretierkörper
- 300: Arretierstift
- AP: Arretierposition
- 310: Stiftabschnitt
- SLA: Stiftlängsachse
- 320: Arretierabschnitt
- ALA: Arretierlängsachse

- S: Schubmittel
- SP: Schubmittelpassage (durch Schubmittel verlaufend)
- SMP: Schubmittelmontageposition

## Patentansprüche

1. Flügelbock (1) zum Verbinden eines Schubmittels (S) eines Fensteröffners mit einem Fensterflügel, umfassend
- einen Fensterverbindungsabschnitt (100) zum Verbinden des Flügelbocks (1) mit dem Fensterflügel;
- einen Schubmittelverbindungsabschnitt (200) zum lösbaren Verbinden des Flügelbocks (1) mit dem Schubmittel (S); und
- einen lösbaren Arretierstift (300) zum lösbaren Verbinden des Schubmittelverbindungsabschnitts (200) mit dem Schubmittel (S), umfassend einen Stiftabschnitt (310) ;
wobei der Schubmittelverbindungsabschnitt (200) umfasst:
- eine Stiftaufnahmepassage (210) zum Einführen des Stiftabschnitts (310); und
- eine Schubmittelaussparung (220) zur Anordnung des Schubmittels (S) in einer Schubmittelmontageposition (SMP);
wobei die Stiftaufnahmepassage (210) durch die Schubmittelaussparung (220) verläuft, so dass der Stiftabschnitt (310) zum lösbaren Verbinden des Schubmittelverbindungsabschnitts (200) mit dem Schubmittel (S) durch eine durch das Schubmittel (S) verlaufende Schubmittelpassage (SP) einführbar ist;
**dadurch gekennzeichnet, dass** der Arretierstift (300) einen Arretierabschnitt (320) umfasst, wobei der Arretierabschnitt (320) zum lösbaren Arretieren des Arretierstifts (300) in eine Arretierposition (AP) rotierbar ist.

2. Flügelbock (1) nach Anspruch 1, wobei der Arretierabschnitt (320) um eine Passagenlängsachse (PLA) der Stiftaufnahmepassage (210) rotierbar ist, wobei der Stiftabschnitt (310) entlang der Passagenlängsachse (PLA) einführbar ist.

3. Flügelbock (1) nach Anspruch 1 oder 2, wobei die Stiftaufnahmepassage (210) zylindrisch oder konisch geformt ist entlang der Passagenlängsachse (PLA).

4. Flügelbock (1) nach einem der vorhergehenden Ansprüche, wobei der Stiftabschnitt (310) zylindrisch oder konisch geformt ist entlang einer Stiftlängsachse (SLA).

5. Flügelbock (1) nach einem der vorhergehenden Ansprüche, wobei die Arretierposition (AP) eine Rastposition ist und/oder wobei der Arretierabschnitt (320) in der Arretierposition (AP) in Rotationsrichtung mit einer überwindbaren Kraft gehalten und/oder eingerastet ist.

6. Flügelbock (1) nach einem der vorhergehenden Ansprüche, wobei der Arretierabschnitt (320) zwischen der Arretierposition (AP) und einer Öffnungsposition bewegbar ist, insbesondere werkzeuglos, ohne dass sich der Stiftabschnitt (310) aus der Stiftaufnahmepassage (210) löst.

7. Flügelbock (1) nach einem der vorhergehenden Ansprüche, wobei der Durchmesser des Stiftabschnitts (310) gleich oder kleiner ist als der Durchmesser der Stiftaufnahmepassage (210).

8. Flügelbock (1) nach einem der vorhergehenden Ansprüche, wobei der Stiftabschnitt (310) gleitend, vorzugsweise werkzeuglos, in die Stiftaufnahmepassage (210) einführbar ist.

9. Flügelbock (1) nach einem der vorhergehenden Ansprüche, wobei der Arretierabschnitt (320) zylindrisch oder konisch geformt ist entlang einer Arretierlängsachse (ALA).

10. Flügelbock (1) nach einem der vorhergehenden Ansprüche, wobei der Stiftabschnitt (310), insbesondere die Stiftlängsachse (SLA), und der Arretierabschnitt (320), insbesondere die Arretierlängsachse (ALA), winklig zueinander angeordnet sind, insbesondere senkrecht.

11. Flügelbock (1) nach einem der vorhergehenden Ansprüche, wobei der Schubmittelverbindungsabschnitt (200) eine Einführaussparung (230) umfasst, wobei der Arretierabschnitt (320) beim Einführen des Stiftabschnitts (310) in die Stiftaufnahmepassage (210) durch die Einführaussparung (230) durchführbar ist.

12. Flügelbock (1) nach einem der vorhergehenden Ansprüche, wobei der Schubmittelverbindungsabschnitt (200) eine Einrastaussparung (240) umfasst, wobei der Arretierabschnitt (320) zum lösbaren Arretieren des Arretierstifts (300) am Schubmittelverbindungsabschnitt (200) in die Einrastaussparung (240) bewegbar, insbesondere rotierbar, ist.

13. Flügelbock (1) nach einem der vorhergehenden Ansprüche, wobei der Fensterverbindungsabschnitt (100) und der Schubmittelverbindungsabschnitt (200) mit einem Querversatz relativ zueinander angeordnet sind.
